Europäisches Patentamt

European Patent Office

Office européen des brevets

(11) Numéro de publication: **0 482 981 B1**

(12) **FASCICULE DE BREVET EUROPEEN**

(45) Date de publication de fascicule du brevet: **19.04.95** (51) Int. Cl.⁶: **C04B 35/65**, C04B 35/10, //B22D41/54

(21) Numéro de dépôt: **91402773.5**

(22) Date de dépôt: **17.10.91**

(54) *Nouveaux matériaux réfractaires constitués de grains liés par une phase liante à base de nitrure d'aluminium contenant des particules de nitrure de bore et/ou de graphite, et procédé.*

(30) Priorité: **24.10.90 FR 9013169**

(43) Date de publication de la demande:
**29.04.92 Bulletin 92/18**

(45) Mention de la délivrance du brevet:
**19.04.95 Bulletin 95/16**

(84) Etats contractants désignés:
**AT BE DE ES FR GB IT NL SE**

(56) Documents cités:
EP-A- 0 133 585          EP-A- 0 168 295
EP-A- 0 198 925          EP-A- 0 332 541
BE-A- 842 477            DE-A- 3 443 250
DE-C- 3 812 266

**WORLD PATENTS INDEX (LATEST), semaine 8212, accession no. 82-23114E (12) Derwent Publications Ltd, Londres, GB;**

(73) Titulaire: **SAVOIE REFRACTAIRES**
**10 rue de l'Industrie**
**F-69631 Venissieux (FR)**

(72) Inventeur: **Schoennahl, Jacques Paul Raymond**
**4 Allée Marcel Achard**
**F-69100 Villeurbanne (FR)**
Inventeur: **Dussaulx, Michel**
**rue de Lagnieu à Blyes**
**F-01150 Lagnieu (FR)**

(74) Mandataire: **Colas, Jean-Pierre et al**
**Cabinet de Boisse**
**37, avenue Franklin D. Roosevelt**
**F-75008 Paris (FR)**

Rank Xerox (UK) Business Services
(3.10/3.09/3.3.3)

## Description

L'invention concerne de nouveaux matériaux réfractaires constitués de grains liés par une phase liante à base de nitrure d'aluminium contenant des particules de nitrure de bore et/ou de graphite dispersées en son sein, ainsi qu'un procédé pour leur fabrication.

La sidérurgie a besoin de matériaux réfractaires de plus en plus performants et fiables : il s'agit en fait d'améliorer simultanément la résistance à la corrosion, la résistance mécanique à chaud et la résistance aux chocs thermiques.

Les applications concernées principalement sont :

- les pièces céramiques réfractaires intervenant dans les dispositifs de protection ou de régulation des jets de fonte ou d'acier. Des exemples particuliers de telles pièces sont les plaques d'obturateur à tiroir, les tubes protecteurs de jet et les busettes immergées,
- les pièces céramiques réfractaires intervenant dans les dispositifs de brassage, soit mécanique, soit par insufflation de gaz, dans le métal en fusion,
- les briques de siège servant de logement ou support aux dispositifs d'insufflation de gaz et aux dispositifs de régulation des jets de métal, ainsi que les dalles d'impact de poche ou de répartiteur.

La grande diversité des sollicitations auxquelles ces matériaux sont confrontés résulte souvent du fonctionnement discontinu des équipements : il y a choc thermique au début puis à la fin d'un cycle ; durant un cycle, les pièces réfractaires sont successivement en contact avec le métal puis un laitier en fusion. Enfin, entre deux cycles, les pièces réfractaires qui restent à une température relativement élevée sont soumises à l'action oxydante de l'air ambiant.

Les contraintes mécaniques pures sont toujours présentes : chocs mécaniques et contraintes résultat des manutentions, contraintes de confinement créées par une enveloppe métallique extérieure, et enfin dans le cas des systèmes de régulation de jet, contraintes liées à la fonction même des pièces réfractaires, c'est-à-dire mouvements et effets d'obturation.

Enfin, l'on notera également que dans tous les cas, les pièces réfractaires considérées sont soumises à l'action érosive du métal en fusion.

La liste des propriétés souhaitées pour ces matériaux réfractaires s'établit donc ainsi :

- résistance mécanique à chaud élevée pour faire face soit à des contraintes mécaniques, soit aux effets d'érosion par l'écoulement de l'acier ;
- excellente résistance à la corrosion chimique par la fonte et l'acier ;
- bonne résistance à la corrosion par les laitiers sidérurgiques et les poudres de couverture ;
- propriétés de non mouillabilité par les métaux et les laitiers, de façon à limiter leur infiltration dans les joints, fissures ou porosités, mais aussi à réduire les risques d'accrochage de croûtes solidifiées lors des refroidissements ;
- bonne résistance à l'oxydation par l'air ;
- excellente résistance aux chocs thermiques ;
- caractère non oxydant face à l'aluminium et au calcium dissous dans certains aciers ;
- propriétés tribologiques pour les pièces mobiles.

Malgré un environnement complexe et agressif on exige des pièces réfractaires concernées une grande fiabilité, car toute ruine accidentelle peut avoir des conséquences catastrophiques pour les installations et pour le personnel.

La présente invention vise à fournir de nouveaux matériaux réfractaires capables de répondre aux exigences mentionnées ci-dessus, ainsi qu'un procédé pour leur préparation.

Plus particulièrement, l'invention concerne de nouveaux matériaux réfractaires caractérisés en ce qu'ils comprennent :

(A) des grains d'au moins un matériau réfractaire dont les températures de fusion et de dissociation thermique sont supérieures à 1700°C ;

(B) une matrice liante liant ces grains entre eux, constituée majoritairement de nitrure d'aluminium AlN de structure hexagonale et/ou d'au moins un des polytypes de AlN désignés dans la notation de Ramsdell par 2H, 27R, 21R, 12H et 15R, comme déterminé à partir d'un diagramme de diffraction de rayons X ; et

(C) des particules de nitrure de bore hexagonal et/ou des paillettes de graphite cristallisé dispersées dans la matrice liante.

Comme exemples de matériaux réfractaires pouvant constituer les grains (A), on peut citer, de façon non limitative, les corindons, la magnésie, le spinelle $MgO\text{-}Al_2O_3$, que ces produits soient électrofondus ou frittés ; les matériaux électrofondus présentant une teneur en alumine d'au moins 85% en poids ; les oxycarbures d'aluminium des types $Al_4O_4C$ et $Al_2OC$, et les produits à base d'oxynitrure d'aluminium. Dans le cas où l'ingrédient (C) est du nitrure de bore, on peut aussi utiliser, comme ingrédient (A), la mullite électrofondue, les matériaux du type mullite-zircone, et la zircone. Le choix de la nature des grains utilisés sera fonction de l'application particulière visée.

La proportion des grains (A) dans les matériaux de l'invention peut varier largement en fonction des propriétés recherchées pour le matériau. A titre indicatif, la proportion des grains (A) peut aller de 32 à 85% en poids environ. A l'heure actuelle on préfère une proportion de 50 à 80% en poids environ.

La phase liante (B), qui lie les grains (A) entre eux, est constituée majoritairement de nitrure d'aluminium AlN de structure hexagonale et/ou d'au moins un des polytypes désignés dans la notation de Ramsdell par 2H, 27R, 21R, 12H et 15R, comme déterminé à partir d'un diagramme de diffraction de rayons X. AlN étant sensible à l'eau, il est avantageux pour les applications où le matériau sera susceptible d'être exposé à de l'eau, de favoriser le développement des polytypes sus-mentionnés.

La proportion de la phase liante (B) peut elle aussi varier largement. A titre indicatif, la proportion de la phase liante (B) peut aller de 10 à 40% en poids environ. A l'heure actuelle, on préfère une proportion de 15 à 30% en poids environ.

Les particules ou paillettes (C) dispersées dans la phase liante peuvent être constituées de nitrure de bore, de graphite cristallisé ou d'un mélange de ceux-ci. Le graphite cristallisé est sous forme de paillettes. La présence de ces particules ou paillettes au sein de la phase liante peut être observée sur des microphotographies prises au microscope électronique à balayage.

La proportion de particules ou paillettes (C) peut également varier largement. A titre indicatif, la proportion des particules ou paillettes(C) peut aller de 3 à 42% en poids. A l'heure actuelle, on préfère une proportion de 5 à 25% environ.

Il est à noter que les proportions des constituants des matériaux de l'invention ne sont données qu'à titre indicatif et de façon approximative dans la mesure où la détermination de ces proportions est difficile à effectuer avec précision sur le matériau final.

Tous les matériaux de l'invention présentent une excellente résistance à la corrosion par la fonte ou l'acier. Ainsi, dans l'essai de corrosion par l'acier par la méthode dynamique dite des "doigts tournants" décrite ci-dessous, tous les matériaux de l'invention ont présenté une perte d'épaisseur nulle ou quasi-nulle pour une durée d'essai de 4 heures, les éprouvettes étant animées d'une vitesse linéaire de 2,4 cm/seconde et l'acier étant un acier XC38 à 1700°C maintenu sous atmosphère d'argon.

L'invention concerne aussi un procédé de fabrication de matériaux réfractaires selon l'invention.

Ce procédé se caractérise en ce que

(1) on prépare une charge comprenant un mélange des constituants suivants dans les proportions indiquées :

a) 35 à 88% en poids de grains dont au moins 90% ont une grosseur comprise entre 50 $\mu$m et 5 mm, ces grains étant constitués d'un matériau réfractaire dont la température de fusion et la température de dissociation thermique éventuelle sont supérieures à 1700°C ;

b) 0 à 25% en poids de particules dont au moins 90% ont une grosseur inférieure à 50 $\mu$m, ces particules étant constituées d'un matériau réfractaire identique ou différent de celui des grains (a) à l'exception de la magnésie, dont la température de fusion et la température de dissociation thermique éventuelle sont supérieures à 1700°C, avec la condition que le total des ingrédients (a) et (b) n'excède pas 88% en poids ;

c) 7 à 30% en poids de poudre d'aluminium dont au moins 90% des particules ont une grosseur inférieure à 80 $\mu$m ;

d) de 3 à 45% en poids de particules de nitrure de bore hexagonal ou de paillettes de graphite cristallisé ou d'un mélange de celles-ci, au moins 80% des paillettes de graphite ayant une grosseur supérieure à 100 $\mu$m,

e) 0 à 3% d'une argile réfractaire séchée et broyée, le total des ingrédients (a) à (e) faisant 100% ; et

f) une petite quantité d'un liant temporaire ;

(2) on met le mélange résultant à la forme désirée par pressage ;

(3) on sèche le mélange conformé ; et

(4) on cuit le mélange conformé et séché sous atmosphère d'azote à une température de 1300°C à 1600°C.

La mise en forme effectuée dans l'étape (2) peut s'effectuer par un pressage uniaxial ou isostatique, de façon classique. Le rôle de l'argile (e) est celui d'un additif de pressage facilitant la mise en forme.

L'étape de séchage (3) peut être effectuée à une température modérément élevée, par exemple de 100 à 200°C, de préférence vers 150°C.

La durée de l'étape de cuisson (4) peut varier largement en fonction notamment de la taille de l'article conformé et séché. A titre indicatif, une durée de maintien de 4 à 10 heures environ à une température de

EP 0 482 981 B1

1300 à 1600°C est habituellement satisfaisante.

On notera qu'il existe une différence entre les teneurs en granulat, graphite et nitrure de bore du mélange initial et la proportion des mêmes constituants dans le produit fini, puisque la cuisson s'accompagne d'une fixation d'azote et donc d'une prise de poids faisant que, ces teneurs dans le produit fini sont moindres que dans le mélange de départ.

Les grains (a) peuvent être constitués, par exemple, de corindon (alumine), de magnésie, de spinelle $MgO\text{-}Al_2O_3$,électrofondus ou frittés, et broyés ; d'un matériau électrofondu et broyé présentant une teneur en alumine d'au moins 85% en poids ; d'oxycarbures d'aluminium des types $Al_4O_4C$ et $Al_2OC$, ou d'un produit à base d'oxynitrure d'aluminium. Dans le cas, où l'ingrédient (d) est du nitrure de bore, on peut aussi utiliser, comme ingrédient (a), la mullite électrofondue, les matériaux du type mullite zircone, et la zircone. Des grains de corindon électrofondu ou fritté (alumine tabulaire) constituent un ingrédient (a) préféré à ce jour.

Les particules (b), dont l'emploi est optionnel, sont choisies dans la même liste de matériaux que celle donnée pour les grains (a). Il n'est, toutefois, pas nécessaire que, pour un mélange donné, le matériau des particules (b) soit identique à celui des grains (a). On préfère à ce jour utiliser un ingrédient (b) formé d'alumine calcinée. Une proportion préférée d'ingrédient (b) va de 9 à 25% en poids environ.

Les teneurs en constituants (c) et (d) élevées correspondront évidemment à des teneurs en constituant (b) faibles ou nulles.

Lorsqu'on désire favoriser la formation, dans la matrice liante de produits de l'invention, d'au moins un des polytypes de AlN, il convient d'assurer la présence dans la charge de départ d'un mélange de particules fines d'alumine d'une grosseur inférieure à 20 $\mu$m et de poudre de silicium dans un rapport en poids $Si/Al_2O_3$ inférieur à environ 1 : 3, la proportion de poudre de silicium pouvant aller jusqu'à environ 35% du poids de l'aluminium avec la condition supplémentaire que la somme poudre de silicium + poudre d'aluminium n'excède pas 30% du poids des ingrédients (a) à (e). L'alumine fine sera dans ce cas considéré comme faisant partie du constituant (b).

Lorsque l'ingrédient (d) est du graphite, celui-ci est sous forme de paillettes.

Le liant temporaire (f) peut être constitué de tout liant temporaire connu. A titre d'exemple, on peut citer les résines phénoliques, les alcools furfuryliques et polyvinyliques, des solutions aqueuses de dextrine ou de carboxyméthyl-cellulose, ou de lignosulfonate de calcium, etc.... A titre indicatif, une quantité de liant temporaire de l'ordre de 2 à 4% en poids environ, par rapport au total des ingrédients (a), (b), (c), (d) et (e) s'est révélée habituellement satisfaisante.

L'invention est illustrée, de façon non limitative, par les exemples suivants. Dans ces exemples, on a préparé des briques d'essai de 220 x 110 x 60 mm par un processus dans lequel les constituants de départ ont été mélangés, par charge de 10 kg, dans un malaxeur Bonnet, mis à la forme de briques à l'aide d'une presse hydraulique exerçant une pression de 1000 bars, séchés à 150°C, puis cuits sous azote, dans un four électrique industriel, à une température de 1300 à 1600°C pendant 4 à 10 heures, selon les cas.

Les propriétés des matériaux obtenus ont été déterminées par les essais suivants :

<u>Résistance à la flexion à chaud</u> : mesurée à l'air, après un échauffement accéléré pour limiter les effets de l'oxydation.

<u>Résistance au choc thermique</u> : nous l'exprimons par la perte, en %, de résistance à la flexion à froid mesurée sur des barreaux 125 x 25 x 25 mm après le traitement suivant :

Introduction brutale des éprouvettes à température ambiante dans un four chauffé à 1200°C, maintien pendant 30 mn, puis trempe des éprouvettes dans de l'eau froide.

<u>Résistance à la corrosion par l'acier et les laitiers</u> : elle est déterminée par la méthode dynamique dite des "doigts tournants". Quatre éprouvettes taillées en forme de barreaux sont fixées en cercle sur un support animé d'un mouvement de rotation selon un axe vertical. Au moins une des éprouvettes sert de référence.

L'agent d'attaque (acier ou laitier) est placé dans un creuset réfractaire et porté à la température d'essai. Lorsque la température d'essai est atteinte, le support porte-éprouvettes est abaissé de façon à plonger l'extrémité inférieure des éprouvettes dans l'acier ou le laitier fondu pendant un temps prédéterminé. A la fin de l'essai, le support porte-éprouvettes est relevé de façon à extraire les éprouvettes de l'agent d'attaque fondu avant solidification de celui-ci. Après refroidissement, on mesure la perte d'épaisseur des éprouvettes et l'on procède si nécessaire à l'examen microscopique du front de corrosion.

<u>Résistance à la corrosion par poudre de couverture</u> : la poudre de couverture, qui est formée de composés à point de fusion relativement bas, est introduite dans les lingotières afin de protéger la surface du métal coulé (acier) contre l'oxydation. Les pièces qui se trouvent à l'interface acier/poudre de couverture, telles que des busettes immergées, subissent une corrosion intense et localisée à ladite interface.

L'essai de résistance à la corrosion par la poudre de couverture est réalisé par la méthode des doigts tournants sus-décrite à propos de la résistance à la corrosion par l'acier et les laitiers.

<div align="center">4</div>

Autres propriétés : les autres propriétés, telles que la densité, la porosité, la résistance à la flexion à froid, etc..... ont été déterminées par les méthodes habituelles utilisées pour les produits réfractaires.

Dans les exemples, on a utilisé les matières premières suivantes :

- Spinelle : un spinelle $MgO-Al_2O_3$ électrofondu titrant 69% $Al_2O_3$ et 30% MgO, commercialisé par la Société Universal Abrasives.
- Magnésie frittée : une magnésie vendue sous l'appellation Nedmag 99 par la Société Billiton Refractories et répondant aux spécifications suivantes : MgO > 98%, $SiO_2$ < 1%, $B_2O_3$ < 0,05% avec un rapport $CaO/SiO_2$ > 2.
- Oxycarbure d'aluminium : granulat électrofondu, titrant environ 2,5% de carbone, constitué d'un mélange des oxycarbures d'aluminium $Al_4O_4C$ et $Al_2OC$ et de corindon, et obtenu selon un procédé décrit dans US-A-4 241 533.
- Oxynitrure d'aluminium : granulat fondu titrant environ 3,6% d'azote et répondant approximativement à la formule de composition $3AlN.7Al_2O_3$, commercialisé par la Société Nippon Crucible sous l'appellation ALON.
- Alumine calcinée : une alumine du commerce titrant au moins 99,5% $Al_2O_3$ et dont le diamètre de particules moyen est d'environ 5 $\mu$m avec 90% des particules comprises entre 1 et 20 $\mu$m.
- Corindon électrofondu répondant à l'analyse suivante en % en poids : $Al_2O_3$ = 96%, $TiO_2$ = 3, SiO, = 0,6%, $Fe_2O_3$ = 0,2%, CaO + MgO + $Na_2O$ + $K_2O$ = 0,2% .
- Silicium en poudre du commerce, vendu sous l'appellation "Silicium T.140" par la Société Péchiney Electrométallurgie, dont au moins 90% des particules ont une grosseur inférieure à 150 $\mu$m.
- Aluminium en poudre du commerce, vendu sous l'appellation "Aluminium 200 TV" par la Société Péchiney Electrométallurgie, dont au moins 90% des particules ont une grosseur inférieure à 80 $\mu$m.
- Graphite naturel cristallisé sous forme de paillettes, en provenance de Chine ou de Madagascar ayant une teneur en cendres inférieure à 17% en poids et dont au moins 80% des particules ont une grosseur supérieure à 100 $\mu$m.
- Nitrure de bore hexagonal, vendu sous l'appellation HCST-A05 par la Société Herman C. Starck. Ce nitrure est formé d'agglomérats d'une grosseur de 1 à 10 $\mu$m constitués de feuillets individuels d'une grosseur de 0,5 à 1 $\mu$m environ.
- Argile broyée, vendue sous l'appellation "DA.40/42" par la Société Denain Anzin Minéraux, répondant à l'analyse chimique suivante, en % en poids : $Al_2O_3$ = 36%, $SiO_2$ = 47%, $Fe_2O_3$ = 1,8%, $TiO_2$ = 1,8%, CaO + MgO + $Na_2O$ + $K_2O$ = 0,8%, perte au feu : 12,6%.

EXEMPLE 1

On a préparé par le mode opératoire général décrit ci-dessus une série d'échantillons B à E formés de grains de corindon à liant AlN contenant diverses proportions de nitrure de bore dispersé au sein du liant. On a également préparé un échantillon A exempt de nitrure de bore à titre comparatif.

Le Tableau I ci-après récapitule les constituants de la charge de départ et leurs proportions, diverses propriétés des matériaux obtenus et les teneurs en matrice liante AlN et en nitrure de bore BN dispersé dans cette matrice, comme déterminé à partir d'un diagramme de diffraction de rayons X. La teneur en grains réfractaires est la différence entre 100% et la somme AlN + BN.

TABLEAU I

| Echantillon | A (compa-ratif) | B | C | D | E |
|---|---|---|---|---|---|
| Corindon noir (2/0,2 mm) | 40 | 40 | 40 | 40 | 40 |
| Corindon noir (0,2/0,05mm) | 20 | 20 | 20 | 20 | 20 |
| Alumine calcinée | 25 | 21 | 17 | 13 | 9 |
| Aluminium en poudre | 12 | 12 | 12 | 12 | 12 |
| Nitrure de bore | 0 | 4 | 8 | 12 | 16 |
| Argile broyée | 3 | 3 | 3 | 3 | 3 |
| Dextrine en poudre | +0,5* | +0,5 | +0,5 | +0,5 | +0,5 |
| Eau | +2 | +2 | +2 | +2 | +2 |

Ingrédients de départ

**TABLEAU I (Suite)**

| Echantillon | A (compa-ratif) | B | C | D | E |
|---|---|---|---|---|---|
| **Propriétés** | | | | | |
| Densité après nitruration | 3,13 | 3,12 | 2,97 | 2,90 | 2,88 |
| Résistance à la flexion à 20°C (bars) | 600 | 413 | 280 | 200 | 162 |
| Résistance à la flexion à 1500°C (bars) | 230 | 220 | 230 | 160 | 110 |
| Résistance au choc thermique** % | -100 | -82 | -61 | -59 | -55 |
| **Composition minéralogique du matériau** – AlN, % | 17 | 17 | 17 | 17 | 17 |
| – BN, % | 0 | 3,7 | 7,5 | 11,2 | 15 |

\* le signe "+" signifie que la quantité indiquée est donnée par rapport à 100% des autres constituants
\*\* après 1 cycle 20°C/1200°C/eau

On voit d'après le Tableau I que les additions de BN améliorent rapidement la résistance au choc thermique. Malgré une décroissance régulière de la résistance mécanique à froid, la résistance mécanique à 1500 °C se maintient à un niveau élevé jusqu'à moins 8% de BN.

On a fabriqué des plaques d'obturateur à tiroir à partir de la composition C et comparé leur comportement en service face à un matériau de corindon à liant mullite, actuellement typique pour cette application. On a observé une usure insignifiante des plaques selon l'invention, alors que le matériau de référence atteignait la limite d'usure tolérable.

Le Tableau IA montre que l'avantage principal du nouveau matériau réside dans sa résistance mécanique à chaud élevée.

Les propriétés tribologiques liées à la présence de BN ont également joué un rôle favorable dans cette application où deux pièces réfractaires doivent coulisser l'une contre l'autre.

7

**TABLEAU IA**

| Type de produit | Produit typique | Produit selon l'invention |
|---|---|---|
| | Corindon liant Mullite dopé zircone | Echantillon C |
| $Al_2O_3$ % <br> $SiO_2$ <br> $ZrO_2$ <br> AlN <br> BN | 87,5 <br> 7,5 <br> 4,5 <br> - <br> - | 75 <br> 0,5 <br> - <br> 17 <br> 7,5 |
| Densité | 3,15 | 2,97 |
| Résistance à la flexion à 1500°C (bar) | 110 | 230 |
| Résistance au choc thermique % | - 59 | - 61 |
| Résistance à la corrosion par l'acier, Taux d'usure (%) | 0 | 0 |

EXEMPLE 2

On a préparé par le mode opératoire général décrit ci-dessus une série d'échantillons F à L formés de grains de corindon à liant AlN contenant, diverses proportions de graphite cristallisé dispersé au sein de la matrice liante.

Le Tableau II ci-dessous récapitule les constituants de la charge de départ et leurs proportions, diverses propriétés des matériaux obtenus, et les teneurs en matrice liante AlN et en graphite dispersé dans cette matrice, comme déterminé à partir d'un diagramme de diffraction de rayons X. La teneur en grains réfractaires est la différence entre 100% et la somme AlN + graphite.

## TABLEAU II

| Echantillons | A (compa-ratif) | F | G | H | I | J | K | L |
|---|---|---|---|---|---|---|---|---|
| Corindon noir (2/0,2 mm) | 40 | 40 | 40 | 40 | 40 | 40 | 40 | 40 |
| Corindon noir (0/0,0,05mm) | 20 | 20 | 20 | 20 | 20 | 20 | 20 | 0 |
| Alumine calcinée | 25 | 21 | 21 | 17 | 13 | 9 | 0 | 0 |
| Aluminium en poudre | 12 | 12 | 11 | 12 | 12 | 12 | 12 | 12 |
| Graphite en paillettes | 0 | 4 | 5 | 8 | 12 | 16 | 25 | 45 |
| Argile broyée | 3 | 3 | 3 | 3 | 3 | 3 | 3 | 3 |
| Dextrine en poudre | +0,5* | +0,5 | +0,5 | +0,5 | +0,5 | +0,5 | +0,5 | +0,5 |
| Eau | +2 | +2 | +2 | +2 | +2 | +2 | +2 | +2 |

Ingrédients de départ

EP 0 482 981 B1

**TABLEAU II (Suite)**

| Echantillons | A (comparatif) | F | G | H | I | J | K | L |
|---|---|---|---|---|---|---|---|---|
| Densité après nitruration | 3,13 | 3,11 | 3,08 | 2,98 | 2,90 | 2,80 | 2,73 | 2,36 |
| Résistance à la flexion à 20°C (bars) | 600 | 595 | 540 | 333 | 261 | 173 | 94 | 50 |
| Résistance à la flexion à 1500°C (bars) | 230 | 190 | 200 | 180 | - | 120 | 60 | - |
| Résistance au choc thermique** | -100 | -91 | -76 | -75 | -69 | -57 | -32 | 0 |
| Composition minéralogique du matériau — AlN, % | 17 | 17 | 15,7 | 17 | 17 | 17 | 17 | 17 |
| — graphite, % | 0 | 3,2 | 4 | 6,4 | 9,6 | 12,8 | 20 | 36 |

*(Propriétés)*

* le signe "+" signifie que la quantité indiquée est donnée par rapport à 100% des autres constituants

** après 1 cycle 20°C/1200°C/eau

On voit, d'après le Tableau II, que la résistance au choc thermique s'améliore à mesure que l'addition de graphite augmente.

Les caractéristiques physiques et la résistance au choc thermique de l'échantillon L sont voisines de celles d'un produit alumine-graphite à liant résine, contenant 38% de graphite, actuellement couramment utilisé pour réaliser des tubes protecteurs de jet et des busettes immergées.

10

EXEMPLE 3

On a préparé par le mode opératoire général décrit ci-dessus un échantillon M formé de grains de corindon à liant AIN contenant à la fois du nitrure de bore et du graphite dispersés au sein de la matrice liante. Cet échantillon est comparé aux échantillons A (sans additif), G (à 5% graphite) et C (à 8% BN).

Le Tableau III ci-dessous résume les constituants de la charge de départ et leurs proportions, diverses propriétés des matériaux obtenus, et leurs teneurs en AIN, BN et graphite, comme déterminé à partir d'un diagramme de diffraction de rayons X.

**TABLEAU III**

| Echantillon | C | G | M | A (comparatif) |
|---|---|---|---|---|
| Corindon noir (2/0,2 mm) | 40 | 40 | 31,5 | 40 |
| Corindon noir (0,2/0,05 mm) | 20 | 20 | 20 | 20 |
| Alumine calcinée | 17 | 21 | 21 | 25 |
| Aluminium en poudre | 12 | 11 | 11 | 12 |
| Nitrure de bore | 8 | - | 8,5 | - |
| Graphite en paillettes | - | 5 | 5 | - |
| Argile broyée | 3 | 3 | 3 | 3 |
| Dextrine en poudre | +0,5* | +0,5 | +0,5 | +0,5 |
| Eau | +2 | +2 | +1,8 | +1,8 |

Ingrédients de départ

11

TABLEAU III (Suite)

|  | Echantillon | C | G | M | A (comparatif) |
|---|---|---|---|---|---|
| Propriétés | Densité après nitruration | 2,97 | 3,08 | 2,83 | 3,13 |
| | Résistance à la flexion à 20°C (bars) | 280 | 540 | 290 | 600 |
| | Résistance à la flexion à 1500°C (bars) | 230 | 200 | 182 | 230 |
| | Résistance au choc thermique ** | -61 | -76 | -56 | -100 |
| | Corrosion 1550°C/3 h/air Taux d'usure (%)*** | -28 | -33 | -30 | -81 |
| Composition minéralogique du matériau | – AlN, %<br>– BN, %<br>– graphite, % | 17<br>7,5<br>0 | 15,7<br>0<br>4 | 15,7<br>8<br>4 | 17<br>0<br>0 |

* le signe "+" signifie que la quantité indiquée est donnée par rapport à 100% des autres constituants
** après 1 cycle 20°C/1200°C/eau
*** interface acier/poudre de couverture

On voit d'après le Tableau III, que l'incorporation conjointe de BN et de graphite (échantillon M) permet une amélioration de la résistance au choc thermique supérieure à celle observée par les matériaux ne contenant que du BN ou du graphite. La résistance à la corrosion par la poudre de couverture des trois échantillons selon l'invention (C, G et M) est en outre bien supérieure à celle de l'échantillon comparatif A dépourvu d'ajout de BN ou de graphite.

EXEMPLE 4

On a préparé par le mode opératoire général décrit ci-dessus une série d'échantillons P à S formés de grains de diverses natures à liant AlN contenant du nitrure de bore dispersé au sein de la matrice liante.

Le Tableau IV ci-dessous résume les constituants de la charge de départ et leur proportions et diverses propriétés des matériaux obtenus. Le Tableau IV reproduit aussi des données relatives à l'échantillon C du Tableau III. Les teneurs en AlN et BN des échantillons P à S étaient à peu près les mêmes que celles de l'échantillon C. On notera que dans les compositions P et S, le constituant (b) est de nature différente du constituant (a), l'alumine calcinée ayant été choisie dans ces exemples comme constituant (b), essentiellement pour des raisons économiques.

**TABLEAU IV**

| Echantillon | C | P | Q | R | S |
|---|---|---|---|---|---|
| Type de grains (2 mm à 0,05 mm) % | Corindon noir 60 | Spinelle MgO/Al$_2$O$_3$ 56,5 | MgO frittée 54,5 | Al404C 54,5 | Al0N 56,5 |
| Magnésie fine (0 à 0,05 mm)% | - | - | 22 | - | - |
| Oxycarbure d'aluminium fin (0 à 0,05 mm)% | - | - | - | 22 | - |
| Alumine calcinée | 17 | 21 | - | - | 21 |
| Aluminium en poudre | 12 | 11 | 12 | 12 | 11 |
| BN | 8 | 8,5 | 8,5 | 8,5 | 8,5 |
| Argile broyée | 3 | 3 | 3 | 3 | 3 |
| Dextrine en poudre | +0,5* | +0,5 | +0,5 | +0,5 | +0,5 |
| Eau | +2 | +1,9 | +1,7 | +1,7 | +1,7 |

Ingrédients de départ

TABLEAU IV (Suite)

| Echantillon | C | P | Q | R | S |
|---|---|---|---|---|---|
| Densité après nitruration | 2,97 | 2,67 | 2,68 | 2,74 | 2,82 |
| Résistance à la flexion à 20°C (bars) | 280 | 205 | 170 | 225 | 365 |
| Résistance à la flexion à 1500°C (bars) | 230 | 98 | 50 | 81 | 175 |
| Résistance au choc thermique ** | -61 | -70 | -63 | -69 | -82 |
| Corrosion 1550°C/5 h/air Poudre de couverture Taux d'usure (%)*** | -67 | -48 | -34 | -68 | – |
| Corrosion 1550°C/2 h/air Laitier basique**** Taux d'usure (%) | -29 | -26 | -12 | -25 | -30 |

Propriétés

\* le signe "+" signifie que la quantité indiquée est donnée par rapport à 100% des autres constituants

\** après 1 cycle 20°C/1200°C/eau

\*** interface acier/poudre de couverture

\**** interface acier/laitier – Analyse du laitier : CaO : 37% – $Al_2O_3$ : 28% – $CaF_2$ : 16% - $SiO_2$ : 12% – FeO : 7%

On voit, d'après le Tableau IV, que le type de grains employés influe sur les propriétés du matériau final. Les grains de magnésie sont préférables pour les applications où la corrosion par le laitier basique ou la poudre de couverture est la contrainte prépondérante. Par contre, la résistance à la flexion à chaud du matériau à grains de magnésie est inférieure à celles obtenues avec d'autres types de grains.

De fait, le matériau Q présente au laboratoire une résistance à la corrosion deux fois supérieure à celle d'un matériau magnésie-graphite à liant résine, habituellement employé face aux laitiers fortement basiques.

EXEMPLE 5

Dans cet exemple on étudie l'influence d'un ajout de silicium à la charge de départ. A cet effet, on a préparé des échantillons T, U et V à partir de charges de départ contenant, respectivement 4, 8 et 14% de silicium.

Le Tableau V ci-dessous indique les ingrédients de départ et leurs proportions et diverses propriétés des matériaux obtenus. Le Tableau V reproduit aussi les données relatives à l'échantillon C du Tableau III, qui avait été préparé sans ajout de silicium.

**TABLEAU V**

| Composition N° | C | T | U*** | V*** |
|---|---|---|---|---|
| Corindon noir (2/0,2 mm) | 40 | 32,5 | 29,5 | 31,5 |
| Corindon noir (0,2/0,05 mm) | 20 | 21 | 20 | 25 |
| Alumine calcinée | 17 | 20,8 | 20,8 | 11,7 |
| Aluminium en poudre | 12 | 11,2 | 11,2 | 6,3 |
| Silicium en poudre | 0 | 4 | 8 | 14 |
| Nitrure de bore | 8 | 8,5 | 8,5 | 8,5 |
| Argile broyée | 3 | 3 | 3 | 3 |
| Dextrine en poudre | +0,5* | +0,5 | +0,5 | +0,5 |
| Eau | +2 | +2 | +2 | +2 |

Ingrédients de départ

15

TABLEAU V (Suite)

| Propriétés / Composition minéralogique du matériau | Composition No. | C | T | U *** | V *** |
|---|---|---|---|---|---|
| Propriétés | Densité après nitruration | 2,97 | 2,88 | 2,79 | 2,77 |
| | Résistance à la flexion à 20°C (bars) | 280 | 397 | 260 | 150 |
| | Résistance à la flexion à 1500°C (bars) | 230 | 242 | 256 | 250 |
| | Résistance au choc thermique ** | -61 | -73 | -59 | -64,5 |
| Composition minéralogique du matériau | − AlN, % | 17 | 0 | 0 | 0 |
| | − AlN (polytype, principalement 15R) | 0 | fort | moyen | faible |
| | − Sialon β', % | 0 | 0 | 20 | 36 |
| | − BN, % | 7,5 | R | R | R |

\* le signe "+" signifie que la quantité indiquée est donnée par rapport à 100% des autres constituants
** après 1 cycle 20°C/1200°C/eau
*** en dehors de l'invention

Le Tableau V montre que l'incorporation d'alumine calcinée finement divisée et de silicium en quantités appropriées dans la charge de départ, favorise la formation de polytypes d'AlN, ce qui peut être désirable lorsque le matériau doit être exposé à de l'eau, par exemple lors d'opérations d'usinage ou lors du stockage en atmosphère humide.

Les polytypes d'AlN sont en effet beaucoup moins sensibles à l'action de l'eau que l'AlN lui-même.

Le Tableau V montre aussi que lorsque la teneur en silicium atteint 8%, il se forme une proportion substantielle de sialon-β' dans la phase liante. Les matériaux résultants à liant sialon sont en dehors du cadre de l'invention.

Les matériaux de l'invention sont utiles pour toutes sortes d'applications dans le domaine de la métallurgie de l'acier. Ils sont particulièrement utiles dans des systèmes d'obturation de type à tampon et busette, et comme plaques de fermetures à tiroir.

Il va de soi que les modes de réalisation décrits ne sont que des exemples et qu'on pourrait les modifier, notamment par substitution d'équivalents techniques, sans sortir pour cela du cadre de l'invention.

**Revendications**

1. Matériaux réfractaires qui comprennent :

    (A) des grains d'au moins un matériau réfractaire dont les températures de fusion et de dissociation thermique sont supérieures à 1700°C ;

    (B) une matrice liante liant ces grains entre eux, constituée majoritairement de nitrure d'aluminium AIN de structure hexagonale et/ou d'au moins un des polytypes de AIN désignés dans la notation de Ramsdell par 2H, 27R, 21R, 12H et 15R, comme déterminé à partir d'un diagramme de diffraction de rayons X ; et

    (C) des particules de nitrure de bore hexagonal et/ou des paillettes de graphite cristallisé dispersées dans la matrice liante.

2. Matériaux réfractaires selon la revendication 1, qui comprennent, en % en poids, 32-85% de (A), 10-40% de (B) et 3-42% de (C).

3. Matériaux réfractaires selon la revendication 2, qui comprennent, en % en poids, 50-80% de (A), 15-30% de (B) et 5-25% de (C).

4. Matériaux réfractaires selon l'une quelconque des revendications 1 à 3, dans lesquels les grains (A) sont formés de corindon (alumine), de magnésie, de spinelle MgO-Al$_2$O$_3$, électrofondus ou frittés, et broyés ; d'un matériau électrofondu et broyé présentant une teneur en alumine d'au moins 85% en poids ; d'oxycarbures d'aluminium des types Al$_4$O$_4$C et Al$_2$OC, ou d'un produit à base d'oxynitrure d'aluminium.

5. Matériaux réfractaires selon la revendication 1, dans lesquels l'ingrédient (C) est du nitrure de bore et dans lesquels les grains (A) sont choisis dans le groupe consistant en la mullite électrofondue, les matériaux du type mullite-zircone et la zircone.

6. Matériaux réfractaires selon la revendication 4, dans lesquels les grains (A) sont formés de corindon.

7. Procédé de production d'un matériau réfractaire, dans lequel

    (1) on prépare une charge comprenant un mélange des constituants suivants dans les proportions indiquées :

    a) 35 à 88% en poids de grains dont au moins 90% ont une grosseur comprise entre 50 $\mu$m et 5 mm, ces grains étant constitués d'un matériau réfractaire dont la température de fusion et la température de dissociation thermique éventuelle sont supérieures à 1700°C ;

    b) 0 à 25% en poids de particules dont au moins 90% ont une grosseur inférieure à 50 $\mu$m, ces particules étant constituées d'un matériau réfractaire identique ou différent de celui des grains (a) à l'exception de la magnésie, dont la température de fusion et la température de dissociation thermique éventuelle sont supérieures à 1700°C, avec la condition que le total des ingrédients (a) et (b) n'excède pas 88% en poids ;

    c) 7 à 30% en poids de poudre d'aluminium dont au moins 90% des particules ont une grosseur inférieure à 80 $\mu$m ;

    (d) de 3 à 45% en poids de particules de nitrure de bore hexagonal ou de paillettes de graphite cristallisé ou d'un mélange de celles-ci, au moins 80% des paillettes de graphite ayant une grosseur supérieure à 100 $\mu$m ;

    (e) 0 à 3% d'une argile réfractaire séchée et broyée ;

    le total des ingrédient (a) à (e) faisant 100% ; et

    (f) une petite quantité d'un liant temporaire ;

    (2) on met le mélange résultant à la forme désirée par pressage ;

    (3) on sèche le mélange conformé ; et

    (4) on cuit le mélange conformé et séché sous atmosphère d'azote à une température de 1300 à 1600°C.

**8.** Procédé selon la revendication 7, dans lequel la charge de départ contient 9 à 25% en poids d'ingrédient (b).

**9.** Procédé selon la revendication 7, dans lequel l'ingrédient (a) est formé de corindon (alumine), de magnésie, de spinelle MgO-Al$_2$O$_3$, électrofondus ou frittés et broyés ; d'un matériau électrofondu et broyé présentant une teneur en alumine d'au moins 85% en poids ; d'oxycarbures d'aluminium des types Al$_4$O$_4$C et Al$_2$OC, ou d'un produit à base d'oxynitrure d'aluminium.

**10.** Procédé selon la revendication 7, dans lequel l'ingrédient (b) est formé de corindon (alumine), de spinelle MgO-Al$_2$O$_3$, électrofondus ou frittés, et broyés ; d'un matériau électrofondu et broyé présentant une teneur en alumine d'au moins 85% en poids ; d'oxycarbures d'aluminium des types Al$_4$O$_4$C et Al$_2$OC, ou d'un produit à base d'oxynitrure d'aluminium.

**11.** Procédé selon la revendication 7, dans lequel la charge de départ contient un mélange de particules fines d'alumine d'une grosseur inférieure à 20 $\mu$m et de poudre de silicium dans un rapport en poids Si/Al$_2$O$_3$, inférieur à 1 : 3 environ, la proportion de poudre de silicium pouvant aller jusqu'à environ 35% du poids de l'aluminium, et la somme des proportions de la poudre de silicium et de la poudre d'aluminium n'excédant pas 30% du poids des ingrédients (a) à (e), la poudre d'alumine étant considérée comme faisant partie du constituant (b).

**12.** Procédé selon la revendication 7, dans lequel l'ingrédient (d) est du nitrure de bore et l'ingrédient (b) est choisi dans le groupe constitué par la mullite électrofondue, les matériaux du type mullite-zircone et la zircone.

**13.** Matériaux réfractaires selon la revendication 1, caractérisés en ce que la matière liante (B) est formée majoritairement d'au moins un desdits polytypes de l'AlN.

**14.** Matériaux réfractaires selon l'une quelconque des revendications 1 à 6 et 13, caractérisés en ce que la matrice (B) est une matrice produite in situ.

**Claims**

**1.** A refractory material which comprises :
(A) grains of at least one refractory material whose melting point and thermal decomposition temperature are higher than 1700°C ;
(B) a binding matrix which binds these grains together and predominantly consists of aluminum nitride AlN of hexagonal structure and/or of at least one of the polytypes of AlN designated in the Ramsdell notation by 2H, 27R, 21R, 12H and 15R, as determined from an X-ray diffraction pattern ; and
(C) hexagonal boron nitride particles and/or crystalline graphite flakes dispersed in the binding matrix.

**2.** The refractory material as claimed in claim 1, which comprises, in % by weight, 32-85% of (A), 10-40% of (B) and 3-42% of (C).

**3.** The refractory material as claimed in claim 2, which comprises, in % by weight, 50-80% of (A), 15-30% of (B) and 5-25% of (C).

**4.** The refractory material as claimed in any one of claims 1 to 3, wherein the particles (A) are formed from electrocast or sintered, and ground, corundum (alumina), magnesia or MgO-Al$_2$O$_3$ spinel ; and electrocast and ground material having an alumina content of at least 85% by weight ; aluminum oxycarbides of the Al$_4$O$_4$C and Al$_2$OC types or a product based on aluminum oxynitride.

**5.** The refractory material as claimed in claim 1, wherein the ingredient (C) is boron nitride and wherein the particles (A) are chosen from the group comprising electrocast mullite, materials of the mullite-zirconia type and zirconia.

**6.** The refractory material as claimed in claim 4, wherein the particles (A) are formed from corundum.

7. A process for the production of a refractory material, which comprises

(1) preparing a batch comprising a mixture of the following constituents in the indicated proportions :

a) 35 to 88% by weight of grains, at least 90% of which are between 50 $\mu$m and 5 mm in size, these grains consisting of a refractory material whose melting point and, where appropriate, thermal decomposition temperature are higher than 1700°C;

b) 0 to 25% by weight of particles at least 90% of which are smaller than 50 $\mu$m in size, these particles consisting of a refractory material identical to or different from that of the grains (a), with the exception of magnesia, the melting point and, where appropriate, thermal decomposition temperature of said refractory material being higher than 1700°C, on condition that the sum of the ingredients (a) and (b) does not exceed 88% by weight;

c) 7 to 30% by weight of aluminum powder, at least 90% of the particles of which are smaller than 80 $\mu$m in size;

d) from 3 to 45% by weight of hexagonal boron nitride particles or crystalline graphite flakes or a mixture of these, at least 80% of the graphite flakes being larger than 100 $\mu$m in size,

e) 0 to 3% of a dried and ground refractory clay,

the sum of the ingredients (a) to (e) making up 100%; and

f) a small amount of a temporary binder;

(2) shaping the resulting mixture into the desired shape by pressing;

(3) drying the shaped mixture; and

(4) firing the shaped and dried mixture under a nitrogen atmosphere at a temperature of 1300°C to 1600°C.

8. The process as claimed in claim 7, wherein the starting batch contains 9 to 25% by weight of ingredient (b).

9. The process as claimed in claim 7, wherein the ingredient (a) is formed from electrocast or sintered, and ground, corundum (alumina), magnesia or MgO-Al$_2$O$_3$ spinel; an electrocast and ground material having an alumina content of at least 85% by weight; aluminum oxycarbides of the Al$_4$O$_4$C and Al$_2$OC types or a product based on aluminum oxynitride.

10. The process as claimed in claim 7, wherein the ingredient (b) is formed from electrocast or sintered, and ground, corundum (alumina), or MgO-Al$_2$O$_3$ spinel; an electrocast and ground material having an alumina content of at least 85% by weight; aluminum oxycarbides of the Al$_4$O$_4$C and Al$_2$OC types or a product based on aluminum oxynitride.

11. The process as claimed in claim 7, wherein the starting batch contains a mixture of fine alumina particles smaller than 20 $\mu$m in size and silicon powder in a ratio by weight of Si/Al$_2$O$_3$ of less than about 1:3, it being possible for the proportion of silicon powder to be up to about 35% of the weight of aluminum, and the sum of the proportions of silicon powder and aluminum powder not exceeding 30% of the weight of ingredients (a) to (e), the alumina powder being regarded as being part of constituent (b).

12. The process as claimed in claim 7, wherein ingredient (d) is boron nitride and ingredient (b) is chosen from the group comprising electrocast mullite, materials of the mullite-zirconia type and zirconia.

13. Refractory materials as claimed in claim 1, characterized in that the binding material (B) predominantly consists of at least one of said polytypes.

14. Refractory materials as claimed in any of claims 1 to 6 and 13, characterized in that the matrix (B) is a matrix produced in situ.

**Patentansprüche**

1. Feuerfeste Materialien, umfassend:

(A) Körner aus wenigstens einem feuerfesten Material, dessen Schmelztemperatur und thermische Dissoziationstemperatur über 1700°C liegen;

(B) eine Bindematrix, die diese Körner miteinander verbindet und die hauptsächlich aus Aluminium-nitrid AlN mit hexagonaler Struktur und/oder wenigstens einem der Polytypen von AlN, die in der

Ramsdell-Schreibweise mit 2H, 27R, 21R, 12H und 15R bezeichnet werden, wie es anhand eines Röntgenbeugungsdiagramms bestimmt wurde, zusammengesetzt ist; und
(C) Teilchen von hexagonalem Bornitrid und/oder Plättchen von kristallisiertem Graphit, die in der Bindematrix dispergiert sind.

2. Feuerfeste Materialien gemäß Anspruch 1, umfassend 32-85 Gew.-% (A), 10-40 Gew.-% (B) und 3-42 Gew.-% (C).

3. Feuerfeste Materialien gemäß Anspruch 2, umfassend 50-80 Gew.-% (A), 15-30 Gew.-% (B) und 5-25 Gew.-% (C).

4. Feuerfeste Materialien gemäß einem der Ansprüche 1 bis 3, in denen die Körner (A) aus elektrogeschmolzenem oder gesintertem und gemahlenem Korund (Aluminiumoxid), Magnesiumoxid, Spinell $MgO \cdot Al_2O_3$, aus einem elektrogeschmolzenen und gemahlenen Material mit einem Aluminiumoxidgehalt von wenigstens 85 Gew.-%, aus Aluminiumoxidcarbiden der Typen $Al_4O_4C$ und $Al_2OC$ oder aus einem auf Aluminiumoxidnitrid beruhenden Produkt bestehen.

5. Feuerfeste Materialien gemäß Anspruch 1, in denen es sich bei Bestandteil (C) um Bornitrid handelt und in denen die Körner (A) aus der Gruppe ausgewählt sind, die aus elektrogeschmolzenem Mullit, Materialien des Typs Mullit-Zirkoniumoxid und Zirkoniumoxid besteht.

6. Feuerfeste Materialien gemäß Anspruch 4, in denen die Körner (A) aus Korund bestehen.

7. Verfahren zur Herstellung eines feuerfesten Materials, bei dem man
   (1) eine Charge herstellt, die ein Gemisch der folgenden Bestandteile in den angegebenen Anteilen umfaßt:
   (a) 35 bis 88 Gew.-% Körner, von denen wenigstens 90% eine Größe zwischen 50 $\mu$m und 5 mm haben, wobei diese Körner aus einem feuerfesten Material bestehen, dessen Schmelztemperatur und gegebenenfalls thermische Dissoziationstemperatur über 1700°C liegen;
   (b) 0 bis 25 Gew.-% Teilchen, von denen wenigstens 90% eine Größe unter 50 $\mu$m haben, wobei diese Teilchen aus einem feuerfesten Material bestehen, das mit dem der Körner (a) identisch oder davon verschieden ist, mit Ausnahme von Magnesiumoxid, und dessen Schmelztemperatur und gegebenenfalls thermische Dissoziationstemperatur über 1700°C liegen, mit der Maßgabe, daß die Bestandteile (a) und (b) insgesamt 88 Gew.-% nicht überschreiten;
   (c) 7 bis 30 Gew.-% Aluminiumpulver, wovon wenigstens 90% der Teilchen eine Größe unter 80 $\mu$m haben;
   (d) 3 bis 45 Gew.-% Teilchen von hexagonalem Bornitrid oder Plättchen von kristallisiertem Graphit oder eines Gemischs davon, wobei wenigstens 80% der Graphitplättchen eine Größe von mehr als 100 $\mu$m haben;
   (e) 0 bis 3% eines getrockneten und gemahlenen feuerfesten Tones;
   wobei die Bestandteile (a) bis (e) insgesamt 100% ausmachen; sowie
   (f) eine kleine Menge eines temporären Bindemittels;
   (2) das resultierende Gemisch durch Pressen in die gewünschte Form bringt;
   (3) das geformte Gemisch trocknet und
   (4) das geformte und getrocknete Gemisch unter Stickstoffatmosphäre bei einer Temperatur von 1300 bis 1600°C brennt.

8. Verfahren gemäß Anspruch 7, bei dem die Ausgangscharge 9 bis 25 Gew.-% des Bestandteils (b) enthält.

9. Verfahren gemäß Anspruch 7, bei dem Bestandteil (a) aus elektrogeschmolzenem oder gesintertem und gemahlenem Korund (Aluminiumoxid), Magnesiumoxid, Spinell $MgO \cdot Al_2O_3$, aus einem elektrogeschmolzenen und gemahlenen Material mit einem Aluminiumoxidgehalt von wenigstens 85 Gew.-%, aus Aluminiumoxidcarbiden der Typen $Al_4O_4C$ und $Al_2OC$ oder aus einem auf Aluminiumoxidnitrid beruhenden Produkt besteht.

10. Verfahren gemäß Anspruch 7, bei dem Bestandteil (b) aus elektrogeschmolzenem oder gesintertem und gemahlenem Korund (Aluminiumoxid), Spinell $MgO \cdot Al_2O_3$, aus einem elektrogeschmolzenen und gemahlenen Material mit einem Aluminiumoxidgehalt von wenigstens 85 Gew.-%, aus Aluminiumoxid-carbiden der Typen $Al_4O_4C$ und $Al_2OC$ oder aus einem auf Aluminiumoxidnitrid beruhenden Produkt besteht.

11. Verfahren gemäß Anspruch 7, bei dem die Ausgangscharge ein Gemisch aus feinen Aluminiumoxidteilchen mit einer Größe unter 20 μm und Siliciumpulver in einem Gewichtsverhältnis $Si/Al_2O_3$ von weniger als ungefähr 1 : 3 enthält, wobei der Anteil des Siliciumpulvers bis zu ungefähr 35% des Gewichts des Aluminiums gehen kann und die Summe der Anteile des Siliciumpulvers und des Aluminiumpulvers 30 Gew.-% der Bestandteile (a) bis (e) nicht überschreitet, wobei das Aluminiumoxidpulver als Teil des Bestandteils (b) angesehen wird.

12. Verfahren gemäß Anspruch 7, bei dem Bestandteil (d) Bornitrid ist und Bestandteil (b) aus der Gruppe ausgewählt wird, die aus elektrogeschmolzenem Mullit, Materialien des Typs Mullit-Zirkoniumoxid und Zirkoniumoxid besteht.

13. Feuerfeste Materialien gemäß Anspruch 1, dadurch gekennzeichnet, daß das Bindemittel (B) hauptsächlich aus wenigstens einem der genannten Polytypen von AIN besteht.

14. Feuerfeste Materialien gemäß einem der Ansprüche 1 bis 6 und 13, dadurch gekennzeichnet, daß die Matrix (B) eine in situ erzeugte Matrix ist.